Europäisches Patentamt

European Patent Office

Office européen des brevets ·

(11) Veröffentlichungsnummer: **0 321 633**
**A2**

## (12) EUROPÄISCHE PATENTANMELDUNG

(21) Anmeldenummer: 88100410.5

(22) Anmeldetag: 14.01.88

(51) Int. Cl.4: **A23G 9/28 , A23G 9/20**

(30) Priorität: 22.12.87 DE 3743650

(43) Veröffentlichungstag der Anmeldung:
28.06.89 Patentblatt 89/26

(84) Benannte Vertragsstaaten:
AT BE CH DE ES FR GB GR IT LI LU NL SE

(71) Anmelder: **Warncke Eiskrem GmbH & CO. KG**

**D-2822 Schwanewede 1(DE)**

(72) Erfinder: **Hoormann, Walter, Dr.-Ing.**
**Nielsenstrasse 3**
**D-2800 Bremen 33(DE)**

(74) Vertreter: **Hoormann, Walter, Dr.-Ing. et al**
**FORRESTER & BOEHMERT**
**Widenmayerstrasse 4/I**
**D-8000 München 22(DE)**

(54) **Verfahren und Vorrichtung zum Herstellen eines mehrschichtigen Konfektproduktes sowie Konfektprodukt.**

(57) Die Erfindung betrifft ein Verfahren und eine Vorrichtung zum Herstellen eines mehrschichtigen, insbesondere strangförmigen, insbesondere dünnschichtigen Konfektproduktes, insbesondere von belüftetem Speiseeis mit eingelagerten Kuvertüre- insbesondere Kakaoglasurschichten, auf einer Unterlage, welches wenigstens zwei übereinander angeordnete Schichten aufweist, von denen wenigstens eine Schicht unter Druck aus einem Spritzwerkzeug auf eine Unterlage bzw. eine untere Konfektschicht gespritzt wird, insbesondere wenn zwischen zwei einander benachbarten Schichten wenigstens abschnittsweise konfektmaterialfreie (Luft-)Kammern gebildet werden und/oder insbesondere wenn die Vertikalerstreckung wenigstens einer (Well-)Schicht größer ist als deren (Schicht-)Dicke, wobei die Unterlage wenigstens zeitweise relativ zu der Konfektmaterial-Abgabe- bzw. Ausstoßgeschwindigkeit des Spritzwerkzeuges eine Relativgeschwindigkeit aufweist, wobei eine Wellschicht so ausgebildet wird, daß ihre Scheitellinien im wesentlichen in Längsrichtung des herzustellenden Konfektproduktes verlaufen.

EP 0 321 633 A2

FIG.2

## Verfahren und Vorrichtung zum Herstellen eines mehrschichten Konfektproduktes sowie Konfektprodukt

Die Erfindung betrifft ein Verfahren zum Herstellen eines mehrschichtigen, insbesondere strangförmigen, insbesondere dünnschichten Konfektproduktes, insbesondere von belüftetem Speiseeis mit eingelagerten Kuvertüre- insbesondere Kakaoglasurschichten, auf einer Unterlage, welches wenigstens zwei - im allgemeinen vorzugsweise mehrere - übereinander angeordnete Schichten bzw. Lagen aufweist, von denen wenigstens eine Schicht unter Druck aus einem düsenartigen Spritzwerkzeug auf eine Unterlage bzw. eine untere Konfekt- bzw. Kuvertüreschicht gespritzt wird, insbesondere wenn zwischen zwei einander benachbarten Schichten wenigstens abschnittsweise konfektmaterialfreie (Luft-)Kammer gebildet werden und/oder insbesondere wenn die Vertikalerstreckung wenigstens einer (vorzugsweise mehrerer) (Well-)Schicht(en) größer ist als deren (Schicht-)Dicke, wobei bei der Herstellung die abstützende Unterlage für das herzustellende Konfektprodukt und/oder eine im Konfektprodukt darunterliegende Schicht wenigstens zeitweise relativ zu der Konfektmaterial-Abgabe- bzw. Auszugsgeschwindigkeit des Spritzwerkzeuges eine Relativgeschwindigkeit aufweist.

Die Erfindung betrifft weiterhin eine Vorrichtung zum Herstellen eines mehrschichtigen, insbesondere strangförmigen, insbesondere dünnschichtigen Konfektproduktes, insbesondere von belüftetem Speiseeis mit eingelagerten Kuvertüre- insbesondere Kakaoglasurschichten, auf einer Unterlage, welches wenigstens zwei übereinander angeordnete Schichten aufweist, mit wenigstens einer Spritzeinrichtung, die wenigstens ein düsenartiges Spritz- bzw. Sprühwerkzeug aufweist, welches über wenigstens eine (Düsen-)Zuführleitung mit wenigstens einem mittels eines Druckerzeugers unter (Über-)Druck zu setzenden Konfektmaterial-Reservoir verbunden ist, und dessen Spritzwerkzeug so ausgebildet bzw. angeordnet ist, daß seine Auslaßrichtung mit der Unterlage einen Winkel von weniger als 90° einschließt, und mit einer das zu bildende Konfektprodukt abstützenden Unterlage, insbesondere zur Durchführung des vorgenannten Verfahrens.

Die Erfindung betrifft schließlich ein mehrschichtiges, insbesondere dünnschichtiges und/oder strangförmiges Konfektprodukt, insbesondere ein belüftetes Speiseeis mit eingelagerten Kuvertüre- insbesondere Kakaoglasurschichten, mit wenigstens zwei übereinander angeordneten (Konfekt-)Schichten, insbesondere mit zwischen übereinander angeordneten Schichten wenigstens abschnittsweise angeordneten, konfektmaterialfreien (Luft-) Kammern, und/oder insbesondere mit wenigstens einer (Well-) Schicht, deren Vertikalerstreckung größer ist als ihre (Schicht-) Dicke.

Ebenso wie beispielsweise und insbesondere aus Speiseeis sowie beispielsweise und insbesondere aus Kakaoglasurschichten bestehende Konfektprodukte unterschiedlichster Ausgestaltung bekannt sind, sind Verfahren und Vorrichtungen zu ihrer Herstellung seit Jahren hinlänglich bekannt.

Zur Herstellung von Konfektprodukten der hier in Rede stehenden Art sind - je nach dem betreffenden Konfektprodukt - unterschiedlichste Verfahren und Vorrichtungen bekannt, die jeweils auf das betreffende Konfektprodukt abstellen.

Denkt man bei dem Erzeugnis "Konfektprodukt" beispielsweise und insbesondere an ein mehrschichtiges Speiseeisprodukt, so ist diesbezüglich beispielsweise auf die Neapolitan- und Spumoni-Speiseeiserzeugung zu verweisen, wobei die vorstehend genannten Speiseeisprodukte seit Jahren auf dem einschlägigen Fachgebiet hinlänglich bekannt sind.

In der japanischen Patentanmeldung 20065/1966 ist ein Zweischicht-Eiskonfekt beschrieben, welches u.a. eine Konfektfüllung sowie eine Schokoladen- bzw. Kakaobeschichtung aufweist.

Eiscreme-Sandwiches mit Bisquit-Bestandteilen sind beispielsweise in der GB-PS 12 19 593 beschrieben.

Bei dem aus der US-PS 25 17 756 bekannten Verfahren wird ein noch bzw. schon fließfähiges Eiscrememateria in Behälter gefüllt, welche bereits relativ starre Bisquits enthalten.

Aus der US-PS 37 70 460 ist ein Verfahren bekannt, bei dem zur Herstellung von Eislutschern, fließfähige, eßbare Materialien nacheinander in eine Form gefüllt und gefroren werden.

Zur Herstellung eines "mehrschichtigen" Speiseeis-Konfektproduktes in der Art von Stratiatella ist es aus der US-PS 22 89 326 weiterhin bekannt, in einem aus Eiscrememateria bestehenden Block durchgehende Löcher vorzusehen, welche mit einem Kuvertürematerial in der Art von Sirup od.dgl. gefüllt werden.

Ein aus unterschiedlichen Konfektmaterialien bestehendes mehrschichtiges Produkt ist weiterhin aus der japanischen Patentanmeldung 55/104 857 bekanntgeworden.

Konfektprodukte aus beispielsweise drei Schichten, die - gemäß der einschlägigen Fachterminologie - extrutiert werden, sind beispielsweise aus der GB-PS 1 439 143 bekannt.

Aus der GB-PS 2 072 482 ist weiterhin ein mehrschichtiges Nahrungsmittelprodukt mit Zwischenschichten aus einem Kuvertürematerial wie beispielsweise Kakaoglasur bekanntgeworden, und aus der GB-PS 1 354 469 ist ein Verfahren zum Herstellen von Konfekt bekanntgeworden, bei dem ein relativ klebriges Material auf eine geschmolzene Schicht eines Überzugmaterials extrudiert wird.

Wenn vor- oder nachstehend von einem "Extrudieren" bzw. einer "Extrudiereinrichtung", einer "Extrudierdüse" od.dgl. die Rede ist, so sei bereits an dieser Stelle darauf verwiesen, daß der (engere technische) Begriff des "Extrudierens" im vorliegenden Zusammenhang an sich fehl am Platze ist, obwohl er sich zwischenzeitlich in der einschlägigen Praxis (sowie der begleitenden Literatur) eingebürgert hat.

Bei einer Extrusion (lat. extudere, extrusum = Herausstoßen, Heraustreiben) handelt es sich bekanntlich um einen aus der Geologie in die Technik übernommenen Begriff. Während in der Geologie hiermit der Ausfluß von Lava und der Auswurf von Lockermaterial sowie das Herauspressen von Magma aus Vulkanen bezeichnet wird, hat die Technik diesen Begriff (zumindest zunächst ausschließlich) für ein Verarbeitungsverfahren für thermoplastische Kunststoffe (zur Herstellung von Rohren, Drähten u.a. Endlosformteilen) aufgenommen, bei dem ein sog. Extruder als Extrudiereinrichtung verwendet wird.

Dabei ist vermutlich seinerzeit auf dem hier einschlägigen technologischen Fachgebiet auf das englische Wort "extrude" (= Ausstoßen; durch eine Form pressen) Bezug genommen worden, als man bei Schaffung einer Maschine zur kontinuierlichen Verarbeitung von plastischen Massen wie Kunststoffen den Begriff "Extruder" eingeführt hat.

Bei einem "klassischen" Extruder für die Herstellung von Endlosformteilen aus Kunststoff wird ein als Pulver, Agglomerat oder Granulat eingesetzter Rohstoff (Kunststoff) kontinuierlich geschmolzen, gemischt und zur Formgebung durch (Extrusions-) Düsen bestimmter Form, Folienköpfe u.ä. gedrückt. Dabei handelt es sich bei einem "Extruder" um eine sog. Schnecken- oder Strangpresse (auch als Schneckenspritzmaschine bezeichnet), mit i.a. mehreren Schnecken, die in einem beheizbaren Gehäuse laufen, so daß der aufgegebene Rohstoff kontinuierlich gefördert, verdichtet, entgast, aufgeschmolzen und schließlich durch die Extrusionsdüsen gedrückt werden kann.

Unter Berücksichtigung dieser in der Technik allgemein üblichen Bezeichnungen für einen "Extruder" bzw. ein "Extrusionsverfahren" ist es im vorliegenden Zusammenhang mithin an sich nicht richtig, von einem "Extrudieren" von Konfektmaterial wie Speiseeis zu sprechen. Denn bei den hier in Rede stehenden Vorrichtungen handelt es sich ersichtlich nicht etwa um Schneckenpressen. Das zu verarbeitende Material wird auch nicht etwa aufgeheizt (dieses wäre ja beispielsweise für eine bei etwa - 6° bis - 8° C zu verarbeitende Speiseeismasse geradezu eine Katastrophe), sondern es handelt sich - wie bei spielsweise aus der GB-PS 1 059 979 deutlich wird - um nichts anderes als um eine Art Spritzvorrichtung mit einem Reservoir für Konfektmaterial (beispielsweise Speiseeismasse) (sowie ggf. einem zweiten Vorratsreservoir für Kakaoglasur od.dgl.), dessen Inhalt mittels eines Überdruckes (aufzubringen beispielsweise durch eine Pumpe oder ein unter Druck stehendes Strömungsmittel) aus (wenigstens) einer Auslaßöffnung des Vorratsbehälters zu drücken ist, mit der - ggf. über eine Verbindungsleitung - eine "Düse" verbunden ist, wobei im Hinblick auf die konkrete Ausgestaltung auch der Begriff "Düse" auf dem hier in Rede stehenden Fachgebiet häufig fehl am Platze ist. Ggf. kann man einer solchen Auslaßstelle eines derartigen Vorrats- hälters eine Art Verteiler nachordnen, wenn man zwei oder mehr Schichten aus ein und demselben Vorratsbehälter bilden will, oder man kann zu demselben Zwecke auch mehrere Vorratsbehälter hintereinander anordnen, wobei dann wiederum an jedem Vorratsbehälter wenigstens ein Auslaß- bzw. Aufgaberohr o.ä. angeordnet sein kann, dessen freies Auslaßende in den oben erörterten Druckschriften überwiegend als "(Extrusions-) Düse" bezeichnet ist.

Obwohl - wie oben ausgeführt - auf dem hier in Rede stehenden Fachgebiet der Begriff des "Extrudierens" schon verbreitet Einzug gehalten hat, soll er aus den obengenannten Gründen hier überwiegend nicht verwendet werden. Geschieht dieses dennoch an der einen oder anderen Stelle, so ist hiermit gemäß den obigen Ausführungen das oben grundsätzlich beschriebene Spritzverfahren gemeint.

Die Anwendung eines derartigen Spritzverfahrens auf dem engeren Fachgebiet einer Herstellung von Konfektprodukten, insbesondere Speiseeis, ist - wie ebenfalls oben bereits ausgeführt worden ist - bereits seit vielen Jahren bekannt. So hat beispielsweise ein Sondermaschinen-Hersteller (nämlich die Firma GHN Sondermaschinenbau GmbH, Hamburg, bzw. ihre Rechtsvorgängerin, die Fa. Kurt Hintze) bereits vor vielen Jahren der Speiseeisindustrie derartige Spritzvorrichtungen angeboten. Eine Veröffentlichung der Anwendung eines derartigen Spritzverfahrens auf die Herstellung von Speiseeis ist beispielsweise der US-PS 4 020 643 zu entnehmen. Die Speiseeisindustrie hat dieses Grundverfahren dann (erheblich) später aufgenommen und in Details etwas weiterentwickelt. Hierzu sei beispielsweise auf die DE-OS 32 31 560 verwiesen, die ein Verfahren bzw. eine Vorrichtung mit schwenkbaren Spritzwerkzeugen (Extrusionsdüsen) zur Bildung von Wellschichten offenbart. Ein im Ergebnis gleiches Verfahren ist beispielsweise in der DE- PS 34 36 578 beschrieben, bei dem derartige Wellschichten durch eine Differenzgeschwindigkeit zwischen einem als abstützende Unterlage dienenden Bandförderer und den "Extrusionsdüsen" dadurch erzielt wird, daß die Auslaßgeschwindigkeit der Spritzeinrichtung größer ist als die Geschwindigkeit des Bandförderers.

Die Bildung derartiger oben definierter Wellschichten (= im wesentlichen "wellenförmig" bzw. "zickzackförmig" od.dgl. ausgebildete Konfektschichten) hat sich aus verschiedenen Gründen als zweckmäßig erwiesen, und zwar zum einen im Hinblick auf die Herstellung gattungsgemäßer Konfektprodukte, zum anderen aber auch im Hinblick auf das Konfektprodukt selbst hinsichtlich seines Erscheinungsbildes und wohl auch - wenngleich in relativ geringem Ausmaß - bzgl. des "Eßerlebnisses". Nicht zuletzt ist ein derartiges Konfektprodukt mit eingeschlossenen Luftkammern auch verkaufspsychologisch ohne Frage vorteilhaft, da es zwangsläufig bei einem gewissen Gewicht von Konfektmasse zu einem relativ großvolumigen Erzeugnis führt, welches bei den potentiellen Käufern u.a. auch aus diesem Grunde im Vergleich mit anderen vergleichbaren Konfektprodukten entsprechenden Anklang findet.

Allen gattungsgemäßen Konfektprodukten mit Wellschichten und ggf. eingeschlossenen (Luft-)Kammern gemeinsam ist der Umstand, daß diese Kammern quer zur Längserstreckung des in aller Regel strangförmigen Konfektproduktes verlaufen, da die Fachwelt bisher davon ausgegangen ist, daß dieses insbesondere für eine quasi kontinuierliche Herstellung unumgänglich sei. Hiervon ausgehend sind dann auch die oben beschriebenen Anstrengungen unternommen worden, um in technischer und wirtschaftlicher Hinsicht befriedigende Lösungen für die Herstellung derartiger Wellschichten bzw. Luftkammern aufzufinden. Abgesehen davon, daß die bekannten Herstellungsverfahren und sowie die hierfür bestimmten und geeigneten Vorrichtungen sämtlichst noch verschiedene Nachteile aufweisen, ist aber auch das mit ihnen herzustellende Konfektmaterial mit Nachteilen verbunden. So liefert ein Konfektprodukt mit seitlich offenen Luftkammern ein unbefriedigendes Erscheinungsbild, so daß man bereits erhebliche Anstrengungen unternommen hat, um diese durchgehenden, seitlich offenen Luftkammern durch Garnierungen od.dgl. zu kaschieren.

Weiterhin bringen die bisher bekannten Verfahren und Vorrichtungen für die Herstellung der hier in Rede stehenden Konfektprodukte auch bereits bei der Herstellung zahlreiche Nachteile mit sich. Diese beginnen bereits mit dem nicht unerheblichen Aufwand, da es bisher lediglich möglich ist, die Schichten einzeln nacheinander zu bilden, so daß zum Einsatz kommenden Vorrichtunge sehr umfangreich und entsprechend aufwendig sind. Auch ist es beispielsweise nicht möglich, Wellschichten praktisch beliebiger Form herzustellen, und das Einbringen dünner Zwischenschichten aus beispielsweise und insbesondere Kakaoglasurmaterial o.ä. ist technisch ebenfalls noch nicht befriedigend gelöst.

Der vorliegenden Erfindung liegt demgemäß die Aufgabe zugrunde, die bekannten gattungsgemäßen Verfahren und Vorrichtungen und nicht zuletzt die bekannten gattungsgemäßen Konfektprodukte unter Vermeidung der vorgenannten und weiterer Nachteile zu verbessern. Dabei soll zunächst einmal die Möglichkeit ge schaffen werden, gattungsgemäße Konfektprodukte beliebiger Querschnittsstruktur standardisiert herstellen zu können, und zwar insbesondere bei einem zumindest überwiegend aus Speiseeismaterial bestehenden Konfektprodukt u.a. auch derart, daß sich eine Struktur ergibt, die auch festigkeitsmäßig befriedigend ist, so daß das fertige Konfektprodukt nicht nach der Herstellung im wesentlichen zusammenfällt, wie dieses bisher überwiegend der Fall ist. Weiterhin soll die Möglichkeit geschaffen werden, wenigstens zwei Schichten, vorzugsweise aber sogar sämtliche Schichten eines derartigen Konfektproduktes simultan vorzugsweise mit ein und derselben Spritzeinrichtung bzw. mit einem einzigen Spritzkopf herstellen zu können. Weiterhin soll das erfindungsgemäß zu schaffende Konfektprodukt an seinen Außenflächen so ausgebildet sein, daß es nicht noch einer zusätzlichen Garnierung od.dgl. bedarf, um die eingeschlossenen Luftkammern zu kaschieren und dem Konfektprodukt ein akzeptables Erscheinungsbild zu geben. Nicht zuletzt soll durch die vorliegende Erfindung der Investitions- und Fertigungsaufwand erheblich zu reduzieren sein, wobei dennoch eine wartungsmäßig einfacher zu handhabende Vorrichtung geschaffen werden soll.

Als Lösung des verfahrensmäßigen Teils der vorstehenden Aufgabe ist erfindungsgemäß vorgesehen, daß eine Wellschicht so ausgebildet wird, daß ihre Scheitellinien im wesentlichen in Längsrichtung des herzustellenden, strangförmigen Konfektproduktes verlaufen.

Bzgl. des vorrichtungsmäßigen Teils der vorstehenden Aufgabe ist erfindungsgemäß in erster Linie vorgesehen, daß der Auslaß des Spritzwerkzeuges so ausgebildet ist, daß die Scheitellinien einer Wellschicht im wesentlichen in Längsrichtung des herzustellenden strangförmigen Konfektproduktes verlaufen.

Bezüglich des Konfektproduktes selbst ist erfindungsgemäß in erster Linie vorgesehen, daß eine (die) Wellschicht(en) so angeordnet ist (sind), daß ihre Scheitellinien im wesentlichen in Längsrichtung des i.a. strangförmig ausgebildeten Konfektproduktes verlaufen.

Bevorzugte Ausgestaltungen der vorliegenden Erfindung sind in Unteransprüchen beschrieben, wobei nachstehend lediglich einige wenige dieser bevorzugten Ausgestaltungen noch kurz erörtert werden sollen und die übrigen Ausgestaltungen für den zuständigen Fachmann aus den obigen Bemerkungen sowie der nachfolgenden Beschreibung von Ausführungsbeispielen unter Einbeziehung der Zeichnung ohne weiteres verständlich sein dürften.

Die obige Rumpfaufgabe sowie die im Zusammenhang mit dieser oben angegebenen Nebenaufgaben sind ersichtlich erfindungsgemäß deshalb in geradezu optimaler Weise zu lösen, weil Wellschichten, deren Scheitellinien in Längsrichtung des strangförmigen Konfektproduktes verlaufen, die Schwierigkeiten, die die einschlägige Industrie bisher bei der Herstellung von (querverlaufenden) Wellschichten gehabt hat, schon vom Ansatz her überhaupt nicht auftreten. Zugleich ergibt sich ohne weiteres die Möglichkeit, das erfindungsgemäß ausgebildete Konfektprodukt an seinen Außenseiten - ohne zusätzliche Garnierung - geschlossen auszubilden, wobei dennoch die Möglichkeit gegeben ist, praktisch ohne Mehraufwand dennoch beispielsweise an den Seitenflächen unterschiedlichste Garnierungen auszubilden, wenn dieses gewünscht ist.

Es kommt hinzu, daß die in Längsrichtung des strangförmigen Konfektproduktes verlaufenden kanalförmigen Luftkammern ersichtlich mehrere Vorteile bieten, welche querverlaufende Luftkammern nicht aufweisen können.

Weiterhin läßt sich die "Wabenstruktur" des erfindungsgemäßen Konfektproduktes beliebig nach jeweiligem Wunsch ausführen. So lassen sich beispielsweise Wellschichten annähernd sinusförmig ausbilden, aber ggf. auch beispielsweise zickzackförmig oder mit einer praktisch beliebigen Vielfalt anderer Formen. Es können sowohl Wellschichten einander benachbart sein als auch beispielsweise eine Wellschicht einer im wesentlichen ebenen Schicht. Dennoch lassen sich praktisch beliebig dünne Kuvertüreschichten ohne irgendwelche technischen Schwierigkeiten als Zwischenschichten einbringen.

Ein ganz erheblicher Vorteil der vorliegenden Erfindung gegenüber dem Stand der Technik liegt darin, daß gleichzeitig zwei oder mehr Schichten (beliebiger Ausgestaltung) gebildet werden können, und im Grenzfall sogar sämtliche Schichten. Dabei ist es nicht nur möglich, praktisch das gesamte Querschnittsprofil des erfindungsgemäßen Konfektproduktes simultan zu erzeugen, sondern auch mit einem einzigen Spritzwerkzeug, wodurch die Investitionskosten für die erforderlichen Vorrichtungen geradezu dramatisch zu reduzieren sind.

Bezüglich der Gestaltung der Well- und sonstigen Schichten sei noch nachgetragen, daß diese erfindungsgemäß so erfolgen kann, daß festigkeitsmäßig optimale Verhältnisse geschaffen werden, was beim Stand der Technik ersichtlich nicht möglich ist. So lassen sich - wie weiter unten noch anhand von Ausführungsbeispielen weiter erläutert wird - Gitterstrukturen schaffen, bei denen die Abstützverhältnisse optimal sind, so daß das erfindungsgemäße Konfektprodukt selbst als Speiseeisprodukt nach seiner Herstellung nicht mehr oder weniger in sich zusammenfällt, wie dieses beim Stand der Technik der Fall ist, sondern seine vorgegebene Struktur beibehält, wie dieses in höchstem Maße erwünscht wird.

Dabei können nicht nur die gespritzten ("extrudierten") Schichten in der vorstehend umrissenen vorteilhaften Weise gebildet werden, sondern es können auch eingelagerte Kuvertüre-Zwischenschichten beispielsweise und insbesondere aus Kakaoglasur o.ä. durch Sprühen eingebracht werden, und zwar kann dieses ebenfalls gleichzeitig zur Bildung von Konfektschichten (beispielsweise aus Speiseeismaterial) erfolgen. Die grundsätzlich gegebene Gefahr eines Einfrierens von beispielsweise Kakaoglasurmasse ist erfindungsgemäß auf einfache Weise dadurch zu beheben, daß ein derartiges Sprühwerkzeug bzw. ein sprühender Teil eines Spritzwerkzeuges - vorzugsweise bis zur Auslaß- bzw. Sprühstelle -beheizt wird, und/oder daß Speiseeismasse führende Teile der Vorrichtung gegenüber ihrer Umgebung (und damit auch relativ zu den beispielsweise Kakaoglasurmasse führenden Teilen) wärmeisoliert werden, so daß der Wärmeaustausch zwischen den Speiseeisführenden Abschnitten und den beispielsweise Kakaoglasurmasse führenden Abschnitten auf ein unbeachtliches, zumindest unschädliches Ausmaß zu reduzieren ist.

Die Erfindung wird nachstehend an Ausführungsbeispielen unter Bezugnahme auf eine Zeichnung weiter erläutert. Es zeigt:

Fig. 1 eine stark schematisierte Darstellung einer erfindungsgemäßen Vorrichtung zum Herstellen eines erfindungsgemäßen Konfektproduktes, welches zum einen aus Speiseeis und zum anderen aus Kakaoglasurmasse besteht;

Fig. 2 ein Ausführungsbeispiel eines erfindungsgemäßen Konfektproduktes (Speiseeis mit eingelagerten Kakaoglasurzwischenschichten) in einem Quer-und Längsschnitt;

Fig. 3 eine (seitliche) Draufsicht auf den Auslaß eines erfindungsgemäßen Spritz- und Sprühwerkzeuges zur Herstellung eines Konfektproduktes gemäß Fig. 2;

Fig. 4 einen (schematisierten) Schnitt durch das Werkzeug gemäß Fig. 3 in Richtung der Schnittlinie IV-IV in Fig. 3 gesehen;

Fig. 5 eine Variante eines erfindungsgemäßen Konfektproduktes in einer Darstellung gemäß Fig. 2; und

Fig. 6 eine Variante einer erfindungsgemäßen Vorrichtung bzw. dessen Spritz- und Sprühwerkzeug in einer Darstellung gemäß Fig. 3.

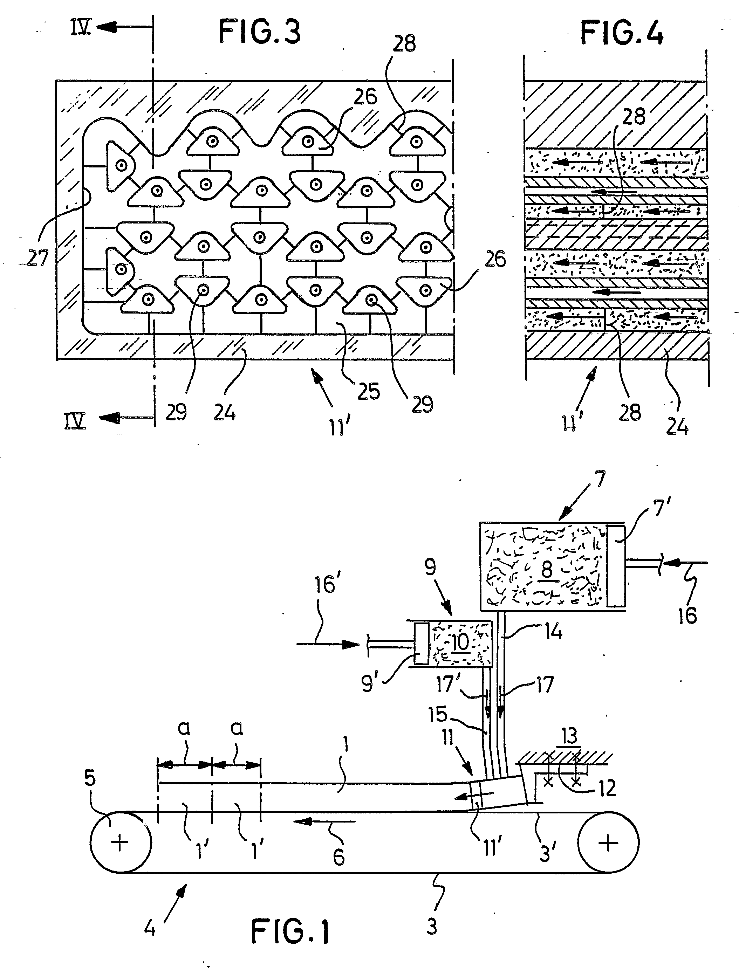

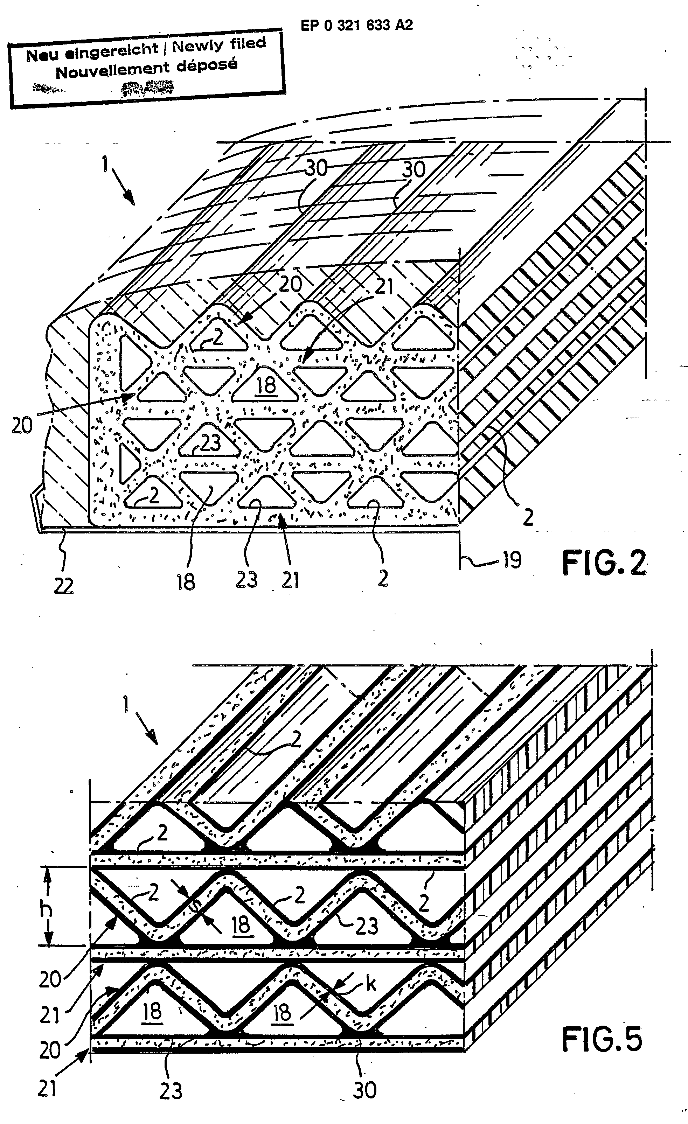

Fig. 1 zeigt eine stark schematisierte Prinzipdarstellung einer erfindungsgemäßen Vorrichtung zum Herstellen eines mehrschichtigen, strangförmigen, dünnschichtigen Konfektproduktes 1, nämlich von Speiseeis mit eingelagerten Kakao glasurschichten (s. z.B. Fig. 2 und 5), wie weiter unten noch erläutert ist. Bei dem dargestellten Ausführungsbeispiel erfolgt die Herstellung auf dem Förderband 3 eines Bandförderers 4, der die abstützende Unterlage für das Konfektprodukt 1 bildet und mittels eines in seiner Kopftrommel 5 angeordneten Trommelantriebes in Richtung des Pfeiles 6 (hinsichtlich seiner Fördergeschwindigkeit steuerbar) antreibbar ist. Dabei kann das Konfektprodukt 1 entweder unmittelbar auf das Obertrum 3' des Förderbandes 3 produziert werden, oder aber beispielsweise auf tablettartige Unterlagen aus formstabiler Kunststoffolie od.dgl., die bei der anschließenden Verpackung dann sogleich ein Verpackungselement bilden können, welches auch für den Konsumenten beim späteren Verzehr als Unterlage zu benutzen ist.

Das Konfektprodukt 1 besitzt mehrere übereinander angeordnete Schichten, wie weiter unten noch im einzelnen erläutert wird, und zwar einerseits Schichten aus Speiseeismaterial, die durch Spritzen produziert werden, und andererseits zwischengelagerte Kakaoglasurschichten, die durch Sprühen von Kakaoglasurmasse erzeugt werden.

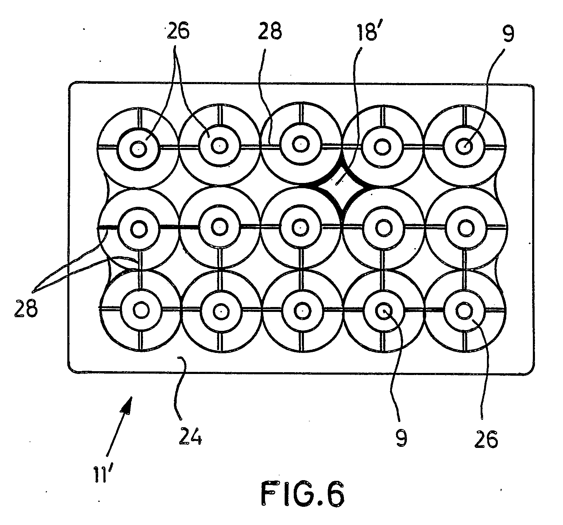

Die aus Speiseeis bestehenden Schichten sind bei den weiter unten anhand der Fig. 2 und 5 erläuterten Ausführungsbeispielen wechselweise wellenförmig bzw. zickzackförmig bzw. eben, d.h. derartige Wellschichten wechseln mit ebenen Schichten ab, obwohl selbstverständlich auch beispielsweise wellenförmig, zickzackförmig o.ä. ausgebildete Schichten einander benachbart sein können, wie dieses beispielsweise anhand von Fig. 6 noch deutlich werden wird.

Die in Fig. 1 dargestellte Vorrichtung besteht im wesentlichen aus einem Speiseeisreservoir 7, welches Speiseeismasse 8 enthält, einem Kakaoglasurreservoir 9, welches Kakaoglasurmasse 10 enthält, einem (einzigen!) Spritz- und Sprühwerkzeug 11, welches in geeigneter Weise (in Fig. 1 ist hierfür ein bügelförmiger Befestigungsrahmen 12 angedeutet) fest mit der Umgebung 13 verbunden ist, bei der es sich beispielsweise um eine Rahmenkonstruktion, ein Gebäudeteil od.dgl. handeln kann.

Zwischen dem Speiseeisreservoir 7 und dem Spritz- und Sprühwerkzeug 11 ist eine Speiseeis-Zuführleitung 14 vorgesehen, während zwischen dem Kakaoglasurreservoir 9 und dem Spritz- und Sprühwerkzeug 11 eine Kakaoglasur-Zuführleitung 15 angeordnet ist. Selbstverständlich können zwischen den Reservoirs 7 bzw. 9 und dem Spritz- und Sprühwerkzeug 11 auch jeweils mehrere Verbindungsleitungen vorhanden sein bzw. es können mehrere Reser voirs mit ggf. unterschiedlicher Speiseeismasse bzw. unterschiedlichem Kuvertürematerial vorgesehen sein, was an dem Prinzip indes nichts ändert, aber weitere Vorteile der vorliegenden Erfindung erkennen läßt.

Beide Reservoirs 7, 9 stehen unter einem Überdruck zur Atmosphäre. Dieses ist jeweils mit einem Kolben 7' bzw. 9' angedeutet, der jeweils in Richtung eines Pfeils 16 bzw. 16' kraftbeaufschlagt ist. Selbstverständlich läßt sich jedoch der Druck, unter welchem die Speiseeismasse 8 bzw. die Kakaoglasurmasse 10 gesetzt wird, auch auf andere Art und Weise erzeugen, nämlich beispielsweise mittels eines geeigneten Strömungsmittels wie beispielsweise gereinigter Druckluft, was verfahrensmäßig u.U. erhebliche Vorteile haben kann.

Zur Erzeugung des strangförmigen Konfektproduktes 1, auf welches nachfolgend detaillierter eingegangen wird, werden die Speiseeismasse 8 und die Kakaoglasurmasse 10 unter einen geeigneten, vorzugsweise einstellbaren Druck gesetzt, so daß dem Spritz-und Sprühwerkzeug 11 gemäß den Pfeilen 17 bzw. 17' Material zugeführt wird, welches aus dem Kopf 11' des Spritz- und Sprühwerkzeuges 11 dann als fertiger Konfektproduktstrang austritt.

Es sei an dieser Stelle darauf verwiesen, daß die Speiseeis-Zuführleitung 14 bis zum am Kopf 11' befindlichen Auslaß hin wärmeisoliert ist, und daß die Kakaoglasur-Zuführleitung 15 bis zu den Sprühdüsen des Kopfes 11 hin in geeigneter Weise beheizt ist, so daß einerseits die Speiseeismasse 8 nicht ihre ideale Verarbeitungstemperatur von ca. - 6° bis - 9° C verliert (bei dieser Temperatur ist übliche Speiseeismasse bekanntlich einerseits noch formfest, andererseits aber "pastös" und läßt sich dabei nicht nur hervorragend spritzen, sondern anschließend auch in Portionen schneiden). Dabei sind Einfriererscheinungen an den Auslässen des Sprüh- und Spritzwerkzeuges 11, wie sie von technischen Laien zunächst befürchtet worden sind, ersichtlich nicht zu befürchten, da die Speiseeismasse ja unter beliebig hohen Druck gesetzt werden kann, so daß selbst bei extrem dünnen Speiseeisschichten irgendwelche Zusetzerscheinungen selbstverständlich nicht auftreten.

Zugleich behält aber auch die Kakaoglasurmasse 10 ihren für das hier vorgesehene Sprühen idealen Verarbeitungstemperatur und erstarrt erst nach dem Sprühvorgang, wie dieses auch vorgesehen, für die Verarbeitung aber ersichtlich völlig problemlos ist.

Bereits an dieser Stelle sei darauf verwiesen, daß die bei der Herstellung des Konfektproduktes 1 entstehenden, in Längsrichtung des Stranges verlaufenden Luftkammern 18 nicht der Gefahr unterliegen, daß sich in ihnen ein Vakuum bzw. ein Unterdruck bildet, der ein Zusammenfallen der angestrebten Gitterstruktur begünstigt oder gar zwangsläufig bewirkt, da die Kammern 18 mit der Atmosphäre in Verbindung stehen, so daß ein Druckausgleich erfolgen kann. Bei der Produktion überlanger Stränge kann auf einfachste Art und Weise dafür gesorgt werden, daß beispielsweise durch Ausbildung des Spritz- und Sprühwerkzeuges 11 bzw. seines Kopfes 11' (ggf. zusätzlich zu dem Ende des Konfektproduktstranges) eine Verbindung der Kammern 18 mit der Atmosphäre geschaffen wird, was selbst für lange Stränge ausreicht, zumal es bei dem erfindungsgemäßen Konfektprodukt - im Gegensatz zum bisherigen Stand der Technik -nach der Herstellung gerade nicht zu einem Zusammenfallen der Gitterstruktur kommt, wenn man dieses wünscht.

Bereits an dieser Stelle sei weiterhin darauf verwiesen, daß die erfindungsgemäße Vorrichtung (s. Fig. 1) ersichtlich gegenüber vergleichbaren Vorrichtungen (s. z.B. DE-OS 32 31 560 oder DE-PS 34 26 578) ganz erheblich einfacher ist, da der gesamte Strang des Konfektproduktes 1 mittels eines einzigen(!) Spritz- und Sprühwerkzeuges 11 gebildet werden kann, während beim Stand der Technik für jede Schicht eine gesonderte Einrichtung bzw. Vorrichtung erforderlich ist. Letzteres ist selbstverständlich auch bei Verwirklichung der vorliegenden Erfindung möglich, doch wird man hiervon schon aus wirtschaftlichen (aber auch aus technischen) Gründen nur in seltenen Ausnahmefällen Gebrauch machen, nämlich dann, wenn es um die Verarbeitung besonders schwieriger Materialien geht und man verfahrenstechnisch (beispielsweise durch Beheizung und/oder Kühlung) besondere Vorkehrungen treffen will, die sich besser mit zwei oder mehr Einzelvorrichtungen verwirklichen lassen.

Fig. 2 zeigt ein Beispiel eines erfindungsgemäßen Konfektproduktes 1 in einer Schnittdarstellung, und zwar die linke Hälfte eines Längsabschnittes eines Konfektproduktstranges. In Fig. 2 ist die mittlere vertikale Symmetrielinie mit 19 bezeichnet. Die Eisschichten sind z.T. als wellenförmige Eisschichten 20 und z.T . als ebene Eisschichten 21 ausgebildet, wobei jeweils eine wellenförmige Eisschicht 20 mit einer ebenen Eisschicht 21 abwechselt.

Die Produktion des Konfektproduktes 1 gemäß Fig. 2 erfolgt auf einer Vorrichtung, wie sie in prinzipieller Art anhand von Fig. 1 oben beschrieben worden ist. Dabei wird das strangförmige Konfektprodukt 1 aber nicht unmittelbar auf dem Obertrum 3' des Förderbandes 3 abgelegt, sondern auf einem als Abstützung dienenden Strang aus formstabiler Kunststoffolie 22, der beim Schneiden des strangförmigen Konfektproduktes 1 mitdurchtrennt werden kann. Statt dessen ist es aber auch möglich, das Konfektprodukt 1 unmittelbar auf dem Obertrum 3' des Bandförderers 4 zu erzeugen, dort den Schneidvorgang durchzuführen, um Portionen einer Länge a (s. Fig. 1) zu schaffen, und die einzelnen Portionen 1' erst nachher auf schalenförmigen Kunststofftrays 22 abzulegen, die dann zugleich einen Bestandteil der Gesamtverpackung bilden.

Aus Fig. 2 ist erkennbar, daß die unterste Schicht des Konfektproduktes 1 eine ebene Eisschicht 21 ist, und daß sich an diese eine erste wellenförmige Eisschicht 20 anschließt u.s.f., wobei die einzelnen Schichten aber, wie aus Fig. 2 erkennbar ist, integral ausgebildet sind, so daß sich eine Gitterstruktur ergibt, die hervorragende Trageigenschaften aufweist. Dieses trägt u.a. dazu bei, daß das Konfektprodukt 1 gemäß Fig. 2 nach seiner Herstellung nicht etwa mehr oder weniger in sich zusammenfällt, wie dieses bei vergleichbaren Konfektprodukten der Fall ist, die derzeit bereits auf dem Markt sind. Vielmehr werden die geschaffenen Luftkammern 18 zumindest im wesentlichen aufrechterhalten, so daß mithin ein gattungsgemäßes Konfektprodukt 1 mit Idealeigenschaften vorliegt.

Außer den Eisschichten 20, 21 sind - gleichsam als Zwischenschichten - Kakaoglasurschichten 23 vorhanden, und zwar an jedem Boden- und Seitenabschnitt einer Luftkammer 18. Selbstverständlich können auch nur ausgewählte Kammern 8 mit Kakaoglasur besprüht werden, wenn dieses gewünscht wird.

Falls aus irgendwelchen Gründen das in Fig. 2 mit durchgezogenen Außenkonturen dargestellte Konfektprodukt formmäßig nicht gewünscht ist, ohne die vorstehend im einzelnen bereits beschriebenen Eigenschaften und Ausgestaltungen aufgeben zu wollen, kann selbstverständlich durch geringfügige Veränderung des Spritzwerkzeuges auch eine völlig andere Außenkontur geschaffen werden. Ein Beispiel hierfür ist in Fig. 2 mit Strich-Zweipunkt-Linien angedeutet.

Der wesentliche Teil des Spritz- und Sprühwerkzeuges 11, nämlich die Austrittsseite seines Kopfes 11' ist in den Fig. 3 und 4 dargestellt. Der Kopf 11' ist bei dem dargestellten Ausführungsbeispiel im wesentlichen blockförmig ausgebildet, obwohl ersichtlich auch eine plattenförmige Ausbildung oder eine sonstige Strukturierung möglich ist. In den Block 24 sind - entsprechend der gewünschten Struktur des Konfektproduktes 1 - "Kanäle" eingearbeitet. Genauer gesagt weist der Kopf 11' des Spritz- und Sprühwerkzeuges 11 zunächst einmal lediglich einen "Kanal" 25 auf, in dem Profilstäbe 26 in der aus Fig. 3 (und Fig. 4) ersichtlichen Weise mit gegenseitigem Abstand sowie mit Abstand zur Innenwandung 27 des hohlen Blockes 24 angeordnet sind. Um die Profilstäbe 26 in der aus den Fig. 3 und 4 erkennbaren Weise halten zu können, sind diese mit Distanzstiften 28 od.dgl. versehen, welche die Profilstäbe 26 in Position halten. Diese stiftartigen Distanzmittel 28 sind vorteilhafter als (durchgehend) stegförmige Distanzmittel, weil sie einen "durchgehenden Schnitt" in den Eisschichten 20 bzw. 21 verhindern. Es hat sich nämlich gezeigt, daß die Speiseeismasse nach Passieren der Distanzstifte 28 wieder "zusammenwächst", insbesondere dann, wenn die Distanzstifte 28 nicht unmittelbar vor dem in Fig. 3 erkennbaren Auslaßende des Kopfes 11 angeordnet sind, was sich ohne Schwierigkeiten realisieren läßt.

Wie aus den Fig. 3 und 4 weiterhin deutlich erkennbar ist, dienen die Profilstäbe 26 nicht allein als Formbildner für das Konfektprodukt 1, sondern enthalten - vorzugsweise zentrisch -sogleich die Zuführleitungen für die Kakaoglasurmasse 10. Diese Zuführleitungen enden in Düsen 29, die in Fig. 3 erkennbar sind. Es sei darauf verwiesen, daß die mittig durch die Profilstäbe 26 verlaufenden Zuführleitungen für Kakaoglasurmasse 10 wärmeisoliert sind, so daß die von der Speiseeismasse mitgeführte "Kälte" nicht dazu führen kann, daß die Kakaoglasurmasse etwa in den Zuführleitungen erstarrt und nicht mehr sprühfähig ist, wenn sie aus dem Kopf 11' austritt. Genauso gut könnte man mithin davon reden,daß die Speiseeismasse führenden Kanäle, die durch die Innenwandung 27 des Blockes 24 sowie die Außenseiten der Profilstäbe 26 gebildet werden, wärmeisoliert sind. In Ausgestaltung ist es auch möglich und vorgesehen, die Zuführleitungen für Kakaoglasurmasse 10 zu beheizen. Dieses kann beispielsweise durch Wärmeaustausch erfolgen, wobei beispielsweise heißes Wasser an den Außenseiten der Zuführleitungen für Kakaoglasurmasse - vorzugsweise im Gegenstrom - entlanggeführt werden kann. Dabei ist die Gegenstromerwärmung deshalb zweckmäßig, weil dabei das Beheizungsmittel Wasser mit höchster Temperatur im Bereich des Austrittes bzw. der Düsen 29 auf den Kopf trifft und dort sicherstellt, daß es unter keinen Umständen etwa zu einem Einfrieren kommen kann.

Fig. 4 zeigt einen Schnitt durch den Kopf 11' gemäß Fig. 3 zur Herstellung eines Konfektproduktes 1 gemäß Fig. 2.

Fig. 5 zeigt in einer Darstellung gemäß Fig. 2 eine Variante. Es ist erkennbar, daß bei dieser Variante die einzelnen Eisschichten 20 bzw. 21 nicht eigentlich integral ausgebildet sind. Dieses kann selbstverständlich ebenfalls mit einem einzigen Spritz- und Sprühwerkzeug 11 realisiert werden, ist bei dem Ausführungsbeispiel gemäß Fig. 5 aber auf andere Weise verwirklicht worden, nämlich dadurch, daß mehrere Spritz- und Sprühwerkzeuge 11 in Förderrichtung 6 des Bandförderers 4 hintereinander angeordnet worden sind, so daß zunächst die unterste ebene Eisschicht 21 gebildet wird. Auf diese wird sodann aus Düsen 29 eine durchgehende Kakaoglasurschicht 23 aufgesprüht, sodann wird die erste wellenförmige Eisschicht 20 aufgebracht u.s.f. Produziert man ein Konfektprodukt gemäß Fig. 5 mit einem einzigen Spritz- und Sprühwerkzeug 11, so kann man, wie dieses in Fig. 5 zusätzlich angedeutet ist, die Kammern 18 im wesentlichen vollständig mit Kakaoglasurmasse ausspritzen, so daß die Kammern umlaufend mit Kakaoglasurmaterial versehen sind.

Fig. 6 zeigt in einer Darstellung gemäß Fig. 3 eine Variante eines Kopfes 11' eines Spritz- und Sprühwerkzeuges 11, und zwar von der Auslaßseite her gesehen. Auch bei dieser Variante ist wiederum ein Block 24 vorgesehen. Die Profilstäbe 26 sind bei diesem Ausführungsbeispiel als Rundstäbe ausgebildet, wobei als Distanzmittel auch hier wiederum Distanzstifte 28 dienen. Das Spritz- und Sprühwerkzeug 11 gemäß Fig. 6 ist nicht nur besonders einfach und demgemäß besonders preiswert herstellbar, sondern es führt auch zu einem Konfektprodukt 1 (in der Zeichnung nicht dargestellt, da es für den Fachmann anhand der übrigen Ausführungsbeispiele leicht vorstellbar ist), welches hinsichtlich seiner Kammern 18 besonders formfest ist (die Kammern 18 besitzen ersichtlich im wesentlichen eine Querschnittsform, wie sie im oberen mittleren Abschnitt von Fig. 6 mit 18' bezeichnet ist).

Anhand der vorstehenden Ausführungen dürfte es ohne weiteres erkennbar sein, daß sowohl das erfindungsgemäße Verfahren wie auch die erfindungsgemäße Vorrichtung nicht zuletzt das erfindungsgemäße Konfektprodukt gegenüber dem bisherigen Stand der Technik ganz eminente Vorteile aufweisen, die von der Fachwelt bisher nicht für möglich gehalten worden sind, wie zumindest mittelbar und prima facie der umfangreichen Literatur dieses Fachgebietes zu entnehmen ist.

Wenn vor- oder nachstehend von Konfitüre bzw. Konfitüreschichten die Rede ist, so soll dieser Begriff nicht im üblichen engeren Sinne verstanden werden, sondern dahingehend erweitert, daß er u.a. auch alle möglichen anderen Fettglasurschichten umfaßt, und darüber hinaus auch noch andere Materialien, die zur Bildung von Zwischenschichten bei mehrschichtigen Speiseeisprodukten üblich oder überhaupt geeignet sind, nämlich beispielsweise Fruchtmark, Fruchtsoßen u.dgl.

| BEZUGSZEICHENLISTE (LIST OF REFERENCE NUMERALS) | | |
|---|---|---|
| 1 Konfektprodukt | 1′ Portionen | 1 |
| 2 Kakaoglasurschicht | | 2 |
| 3 Förderband | 3′ Obertrum (von 3) | 3 |
| 4 Bandförderer | | 4 |
| 5 Kopftrommel | | 5 |
| 6 Pfeil | | 6 |
| 7 Speiseeisreservoir | 7′ Kolben | 7 |
| 8 Speiseeismasse | | 8 |
| 9 Kakaoglasurreservoir | 9′ Kolben | 9 |
| 10 Kakaoglasurmasse | | 10 |
| 11 Spritz- und Sprühwerkzeug | 11′ Kopf | 11 |
| 12 Befestigungsrahmen | | 12 |
| 13 Umgebung | | 13 |
| 14 Speiseeis-Zuführleitung | | 14 |
| 15 Kakaoglasur-Zuführleitung | | 15 |
| 16,16′ Pfeil | | 16 |
| 17,17′ Pfeil | | 17 |
| 18 (Luft-)Kammern | | 18 |
| 19 Mittellinie | | 19 |
| 20 Eisschichten (wellenförmige) | | 20 |
| 21 Eisschichten (ebene) | | 21 |
| 22 Kunststoff-Schalen | | 22 |
| 23 Kakaoglasurschichten | | 23 |
| 24 Block | | 24 |
| 25 Kanal | | 25 |
| 26 Profilstäbe | | 26 |
| 27 Innenwandung | | 27 |
| 28 Distanzstifte | | 28 |
| 29 Düsen | | 29 |
| 30 Scheitellinien | | 30 |

**Ansprüche**

1. Verfahren zum Herstellen eines mehrschichtigen, insbesondere strangförmigen, insbesondere dünnschichtigen Konfektproduktes, insbesondere von belüftetem Speiseeis mit eingelagerten Kuvertüre- insbesondere Kakaoglasurschichten, auf einer Unterlage, welches wenigstens zwei übereinander angeordnete

9

Schichten aufweist, von denen wenigstens eine Schicht unter Druck aus einem Spritzwerkzeug auf eine Unterlage bzw. eine untere Konfektschicht gespritzt wird, insbesondere wenn zwischen zwei einander benachbarten Schichten wenigstens abschnittsweise konfekt materialfreie (Luft-)Kammern gebildet werden und/oder insbesondere wenn die Vertikalerstreckung wenigstens einer (Well-)Schicht größer ist als deren (Schicht-)Dicke, wobei die Unterlage wenigstens zeitweise relativ zu der Konfektmaterial-Abgabe- bzw. Ausstoßgeschwindigkeit des Spritzwerkzeuges eine Relativgeschwindigkeit aufweist, dadurch gekennzeichnet, daß eine Wellschicht (20) so ausgebildet wird, daß ihre Scheitellinien (30) im wesentlichen in Längsrichtung (6) des herzustellenden Konfektproduktes (1) verlaufen.

2. Verfahren nach Anspruch 1, dadurch gekennzeichnet, daß eine von einer Halbwelle einer Wellschicht (20) und dem darunterliegenden Abschnitt der unter der Wellschicht (20) angeordneten Schicht (z. B. 21) gebildeten Kammer (18) belüftet ist.

3. Verfahren zum Herstellen eines mehrschichtigen, insbesondere strangförmigen, insbesondere dünnschichtigen Konfektproduktes, insbesondere von belüftetem Speiseeis mit eingelagerten Kuvertüre- insbesondere Kakaoglasurschichten, auf einer Unterlage, welches wenigstens zwei übereinander angeordnete Schichten aufweist, von denen wenigstens eine Schicht unter Druck aus einem Spritzwerkzeug auf eine Unterlage bzw. eine untere Konfektschicht gespritzt wird, insbesondere wenn zwischen zwei einander benachbarten Schichten wenigstens abschnittsweise konfektmaterialfreie (Luft-)Kammern gebildet werden und/oder insbesondere wenn die Vertikalerstreckung wenigstens einer (Well-)Schicht größer ist als deren (Schicht-)Dicke, wobei die Unterlage wenigstens zeitweise relativ zu der Konfektmaterial-Abgabe-bzw. Ausstoßgeschwindigkeit des Spritzwerkzeuges eine Relativgeschwindigkeit aufweist, insbesondere nach Anspruch 1 oder Anspruch 2, dadurch gekennzeichnet, daß wenigstens zwei Schichten (z.B. 21, 20, 21, 20...)des Konfektproduktes (1) gleichzeitig gebildet werden.

4. Verfahren nach einem oder mehreren der vorhergehenden Ansprüche, insbesondere nach Anspruch 3. dadurch gekennzeichnet, daß eingelagerte Kuvertüre- insbesondere Kakaoglasurschichten (23) in an sich bekannter Weise auf die Unterlage (3´; 22) bzw. eine bereits gebildete Konfektschicht aufgesprüht werden.

5. Verfahren nach einem oder mehreren der vorhergehenden Ansprüche, insbesondere nach Anspruch 4, dadurch gekennzeichnet, daß ein Sprühwerkzeug beheizt wird.

6. Verfahren nach Anspruch 5, dadurch gekennzeichnet, daß ein Sprühwerkzeug im wesentlichen bis zu seiner Auslaßstelle (29) beheizt wird.

7. Verfahren nach Anspruch 5 oder 6, dadurch gekennzeichnet, daß das Spritz- und/oder Sprühwerkzeug (11) so beheizt wird, daß ein aus Kakaoglasurmasse od.dgl. bestehendes Konfekt- bzw. Kuvertürematerial eine Austrittstemperatur oberhalb der Erstarrungstemperatur aufweist.

8. Verfahren nach Anspruch 5 oder 6, dadurch gekennzeichnet, daß die für die Herstellung des Konfektproduktes (1) verwendete Vorrichtung so betrieben wird, daß ein aus Speiseeismasse (8) od.dgl. bestehendes Konfektmaterial eine Austrittstemperatur von ca. - 1o° bis - 3° C aufweist.

9. Verfahren nach Anspruch 8, dadurch gekennzeichnet, daß die Austrittstemperatur ca. - 9° bis - 6° C ist.

10. Verfahren nach einem oder mehreren der vorhergehenden Ansprüche, insbesondere Anspruch 8 oder 9, dadurch gekennzeichnet, daß ein Speiseeismaterial od.dgl. führender Abschnitt der für die Herstellung des Konfektproduktes (1) verwendeten Vorrichtung relativ zu einem beheizten Abschnitt des Spühwerkzeuges gekühlt wird oder/und (wärme-)isoliert wird.

11. Verfahren nach einem oder mehreren der vorhergehenden Ansprüche, dadurch gekennzeichnet, daß die Schichtdicke (s) einer aus Speiseeismaterial od.dgl. bestehenden Schicht (20, 21) etwa mit wenigstens 3 mm ausgebildet wird.

12. Verfahren nach einem oder mehreren der vorhergehenden Ansprüche, dadurch gekennzeichnet, daß ein aufzusprühendes, aus Kakaoglasur od.dgl. bestehendes Konfekt- bzw. Kuvertürematerial (10) mit einem Sprühstrahl-Anfangsdurchmesser von wenigstens ca. 0,5 bis 1,0 mm versprüht wird.

13. Verfahren nach Anspruch 12, dadurch gekennzeichnet, daß der Sprühstrahl-Anfangsdurchmesser etwa 0,8 mm beträgt.

14. Vorrichtung zum Herstellen eines mehrschichtigen, insbesondere strangförmigen, insbesondere dünnschichtigen Konfektproduktes, insbesondere von belüftetem Speiseeis mit eingelagerten Kuvertüre- insbesondere Kakaoglasurschichten, auf einer Unterlage, welches wenigstens zwei übereinander angeordnete Schichten aufweist, mit wenigstens einer Spritzeinrichtung, die wenigstens ein düsenartiges Spritz- bzw. Sprühwerkzeug aufweist, welches über wenigstens eine Zuführleitung mit wenigstens einem mittels eines Druckerzeugers unter Überdruck zu setzenden Konfektmaterialreservoir verbunden ist, und dessen Spritz- bzw. Sprühwerkzeug so angeordnet ist, daß seine Auslaßrichtung mit der Unterlage einen Winkel von weniger als 90° einschließt, und mit einer das zu bildende Konfektprodukt abstützenden Unterlage, insbesondere zur Durchführung des Verfahrens nach einem oder mehreren der Ansprüche 1 bis 13,

10

dadurch gekennzeichnet, daß der Auslaß des Spritz- und Sprüh werkzeuges (11) so ausgebildet ist, daß die Scheitellinien (30) einer Wellschicht (20) im wesentlichen in Längsrichtung (6) des herzustellenden Konfektproduktes (1) verlaufen.

15. Vorrichtung nach Anspruch 14, dadurch gekennzeichnet, daß der Auslaß des Spritz- und Sprühwerkzeuges (11) zur Bildung einer Wellschicht (20) aus einem im wesentlichen dem quer zur Längsrichtung des strangförmigen Konfektproduktes (1) verlaufenden Querschnittsprofil entsprechenden, im wesentlichen als wellen bzw. zickzackförmiger Auslaßschlitz besteht.

16. Vorrichtung nach Anspruch 14 oder 15, dadurch gekennzeichnet, daß die Breite des/eines Auslaßschlitzes in an sich bekannter Weise im wesentlichen gleich der Breite des zu bildenden Konfektproduktstranges ist.

17. Vorrichtung nach einem oder mehreren der Ansprüche 14 bis 16, dadurch gekennzeichnet, daß ein/das Spritz- und Sprühwerkzeug (11) im Bereich eines Halbwellenabschnittes eines Auslaßschlitzes eine Auslaßöffnung aufweist, die mit der Atmosphäre in Verbindung steht.

18. Vorrichtung zum Herstellen eines mehrschichtigen, insbesondere strangförmigen, insbesondere dünnschichtigen Konfektproduktes, insbesondere von belüftetem Speiseeis mit eingelagerten Kuvertüre-insbesondere Kakaoglasurschichten, auf einer Unterlage, welches wenigstens zwei übereinander angeordnete Schichten aufweist, mit wenigstens einer Spritzeinrichtung,die wenigstens ein düsenartiges Spritz- bzw. Sprühwerkzeug aufweist, welches über wenigstens eine Zuführleitung mit wenigstens einem mittels eines Druckerzeugers unter Überdruck zu setzenden Konfektmaterialreservoir verbunden ist, und dessen Spritz-bzw. Sprühwerkzeug so angeordnet ist, daß seine Auslaßrichtung mit der Unterlage einen Winkel von weniger als 90° einschließt, und mit einer das zu bildende Konfektprodukt abstützenden Unterlage, insbesondere zur Durchführung des Verfahrens nach einem oder mehreren der Ansprüche 1 bis 13, insbesondere nach einem oder mehreren der Ansprüche 14 bis 17, dadurch gekennzeichnet, daß ein/das Spritz- und Sprühwerkzeug (11) mehrere Auslaßschlitze aufweist.

19. Vorrichtung nach Anspruch 18, dadurch gekennzeichnet, daß die Auslaßschlitze mit gegenseitigem Vertikalabstand übereinander angeordnet sind.

20. Vorrichtung nach Anspruch 18 oder 19, dadurch gekennzeichnet, daß wenigstens einer der Auslaßschlitze im wesentlichen wellen- bzw. zickzackförmig ausgebildet ist.

21. Vorrichtung nach einem oder mehreren der Ansprüche 14 bis 20, insbesondere einem der Ansprüche 18 bis 20, dadurch gekennzeichnet, daß zwischen zwei einander benachbarten Auslaßschlitzen eines/des Spritz- und Sprühwerkzeuges (11) wenigstens eine Sprühdüse (29) zum Versprühen von Kuvertürematerial (10) angeordnet ist.

22. Vorrichtung nach einem oder mehreren der Ansprüche 18 bis 21, dadurch gekennzeichnet, daß nur ein Spritz- und Sprühwerkzeug (11) vorhanden ist, welches sämtliche Auslaßschlitze und/oder Sprühdüsen (29) aufweist.

23. Vorrichtung nach einem oder mehreren der Ansprüche 14 bis 22, dadurch gekennzeichnet, daß ein Spritz- und/oder Sprühwerkzeug (11) und/oder wenigstens eine Zuführleitung (15) beheizbar ist.

24. Vorrichtung nach Anspruch 23, dadurch gekennzeichnet, daß das Spritz- und/oder Sprühwerkzeug (11) (ggf. einschließlich seiner Zuführleitung(en) (15)) im wesentlichen bis zu seiner Auslaßstelle (29) zu beheizen ist.

25. Vorrichtung nach Anspruch 24, dadurch gekennzeichnet, daß ein/das Spritz- und Sprühwerkzeug (11) so zu beheizen ist, daß das betreffende Konfektmaterial bei/nach seinem Austritt aus dem Spritz- und Sprühwerkzeug (11) flüssig bzw. pastös ist.

26. Vorrichtung nach Anspruch 25, dadurch gekennzeichnet, daß das Spritz- und Sprühwerkzeug (11) so zu beheizen ist, daß die Austrittstemperatur bei einem aus Speiseeismaterial (8) od.dgl. bestehenden Konfektmaterial ca. - 10° bis ca. - 3° C ist.

27. Vorrichtung nach Anspruch 26, dadurch gekennzeichnet, daß die Austrittstemperatur ca. - 9° bis ca. - 6° C ist.

28. Vorrichtung nach einem oder mehreren der Ansprüche 14 bis 27, insbesondere nach Anspruch 25, dadurch gekennzeichnet, daß ein/das Spritz- und Sprühwerkzeug (11) und/oder seine Zuführleitungen (z.B. 15) so zu beheizen bzw. so wärmeisoliert ist, daß bei einem aus Kakaoglasur (10) od.dgl. bestehenden Konfekt-bzw. Kuvertürematerial die Austrittstemperatur über der Erstarrungstemperatur liegt.

29. Vorrichtung nach einem oder mehreren der Ansprüche 14 bis 28, insbesondere nach einem der Ansprüche 14 bis 24, dadurch gekennzeichnet, daß ein Speiseeismaterial (8) od.dgl. führender Abschnitt des Spritz- und Sprühwerkzeuges (11) oder/und eine Zuführleitung (14) zu kühlen ist.

30. Vorrichtung nach einem oder mehreren der Ansprüche 14 bis 29. dadurch gekennzeichnet, daß ein Konfektmaterial führender Abschnitt des Spritz- und Sprühwerkzeuges (11) oder/und eine Zuführleitung (14, 15) wärmeisoliert ist.

31. Vorrichtung nach einem oder mehreren der Ansprüche 14 bis 30, dadurch gekennzeichnet, daß die Höhe eines Auslaßschlitzes und damit die Schichtdicke (s) einer Konfektschicht (20, 21) etwa wenigstens 3 mm beträgt.

32. Vorrichtung nach einem oder mehreren der Ansprüche 14 bis 31, dadurch gekennzeichnet, daß der Austrittsdurchmesser der Sprühdüsen (29) wenigstens ca. 0,5 bis 1,0 mm beträgt.

33. Vorrichtung nach Anspruch 32, dadurch gekennzeichnet, daß der Austrittsdurchmesser der Sprühdüsen (29) ca. 0,8 mm beträgt.

34. Vorrichtung nach einem oder mehreren der Ansprüche 14 bis 33, dadurch gekennzeichnet, daß die Auslaßschlitze des Spritz-und Sprühwerkzeuges (11) zur Bildung einander benachbarter Konfektschichten wenigstens abschnittsweise miteinander verbunden sind.

35. Vorrichtung nach Anspruch 34, dadurch gekennzeichnet, daß das Spritz- und Sprühwerkzeug eine im wesentlichen der Außenkontur des herzustellenden Konfektproduktes (1) entsprechende Auslaßöffnung aufweist; und daß mit Abstand zum Rand der Auslaßöffnung profilbildende Profilstäbe (26) od.dgl. angeordnet sind, die durch Distanzmittel (28) in dem vorgegebenen Abstand zueinander gehalten sind.

36. Vorrichtung nach Anspruch 35, dadurch gekennzeichnet, daß die Distanzmittel aus Distanzstiften (28) bestehen, die jeweils wenigstens zwei einander benachbarte Profilstäbe (26) oder einen Profilstab (26) mit der Innenwandung (27) des Kopfes (11') des Spritz- und Sprühwerkzeuges (11) miteinander verbinden.

37. Vorrichtung nach Anspruch 35 oder 36, dadurch gekennzeichnet, daß die Sprühdüsen (29) an den Profilstäben (26) od.dgl. angeordnet sind.

38. Vorrichtung nach Anspruch 37, dadurch gekennzeichnet, daß die Sprühdüsen (29) etwa mittig zur Längsachse der Profilstäbe (26) od.dgl. angeordnet sind.

39. Mehrschichtiges, insbesondere dünnschichtiges und/oder strangförmiges Konfektprodukt, insbesondere belüftetes Speiseeis mit eingelagerten Kuvertüre- insbesondere Kakaoglasurschichten, mit wenigstens zwei übereinander angeordneten Schichten, insbesondere mit zwischeneinander angeordneten Schichten wenigstens abschnittsweise angeordneten, konfektmaterialfreien (Luft-)Kammern, und/oder insbesondere mit wenigstens einer (Well-)Schicht, deren Vertikalerstreckung größer ist als ihre (Schicht-)Dicke, dadurch gekennzeichnet, daß eine (die) Wellschicht(en) (20) so angeordnet ist (sind), daß ihre Scheitellinien (30) im wesentlichen in Längsrichtung (6) des Konfektproduktes (1) verlaufen.

40. Konfektprodukt nach Anspruch 39, dadurch gekennzeichnet, daß wenigstens zwei einander benachbarte Schichten integral ausgebildet sind.

41. Konfektprodukt nach Anspruch 40, dadurch gekennzeichnet, daß sämtliche Schichten (20, 21, 23) integral ausgebildet sind.

42. Konfektprodukt nach einem oder mehreren der Ansprüche 39 bis 41, dadurch gekennzeichnet, daß die (Schicht-)Dicke (s) einer aus Speiseeis od.dgl. bestehenden Schicht (z.B. 20, 21) in an sich bekannter Weise höchstens 5 mm beträgt.

43. Konfektprodukt nach einem oder mehreren der Ansprüche 39 bis 42, dadurch gekennzeichnet, daß die (Schicht-)Dicke (k) einer aus Kakaoglasur (10) od.dgl. bestehenden Schicht (23) in an sich bekannter Weise höchstens 1 mm beträgt.

44. Konfektprodukt nach einem oder mehreren der Ansprüche 39 bis 43, in an sich bekannter Weise gekennzeichnet durch wenigstens vier übereinander angeordnete Schichten (z.B. 20, 23, 21, 23, 21...).

45. Vorrichtung nach einem oder mehreren der Ansprüche 14 bis 38, dadurch gekennzeichnet, daß die Auslaßschlitze des Spritz- und Sprühwerkzeuges (11) bzw. dessen Kopfes (11') durch die Innenwandung (27) eines blockförmigen Kopfes (11) sowie mehrere Profilstäbe (26) gebildet werden, die mit gegenseitigem Abstand zueinander sowie zur Innenwandung (27) angeordnet und mittels Distanzmittel (28) gehalten sind.

**FIG.3**

**FIG.4**

**FIG.1**

FIG.2

FIG.5

EP 0 321 633 A2

FIG.6